# EUROPEAN PATENT SPECIFICATION

(11) **EP 3 206 881 B1**
(45) Date of publication and mention of the grant of the patent: **25.12.2019**
(21) Application number: 15849878.2
(22) Date of filing: 16.10.2015
(51) Int. Cl.: B41M 3/06, B41M 3/00, B41M 1/18, B41M 7/00, B44C 3/02, B41M 1/10, B44C 5/04

(54) **DECORATIVE PRINTING PROCESS**
DEKORDRUCKVERFAHREN
PROCÉDÉ D'IMPRESSION DÉCORATIVE

(30) Priority: 17.10.2014 US 201462065228 P
(43) Date of publication of application: 23.08.2017
(73) Proprietor: Sun Chemical Corporation, Parsippany, NJ 07054 (US)
(72) Inventor: ZHANG, Yuemei, Ramsey, NJ 07446 (US); SCHOTTLAND, Philippe, Sparta, NJ 07871 (US)
(74) Representative: Carpmaels & Ransford LLP
(86) International application number: PCT/US2015/055937
(87) International publication number: WO 2016/061455

(56) References cited:
- EP-A2- 0 697 295
- US-A- 5 019 202
- US-A- 5 271 988
- US-A1- 2003 104 138
- US-A1- 2006 027 118
- US-B1- 6 551 694

## Description

### FIELD OF THE INVENTION

The present invention is directed to a process for producing printed decorative articles, and in particular decorative paper, that avoids the use of organic solvents and curing agents and which provides an article that exhibits enhanced durability upon curing with energy curing radiation, such as electron beam (EB) radiation.

### BACKGROUND OF THE INVENTION

The present invention relates to printed decorative materials having a three dimensional or embossed effect suitable for use as a residential interior material or a furniture surfacing material.

JPB 89/17427 discloses printing a pore pattern on a substrate using a curable ink composition containing a repellent. Subsequently a thermosetting paint is coated thereon. Upon heating the paint is repelled from the areas where the curable ink composition has been applied, thereby forming concavities. However, the ink and paint compositions used herein are oil-based and the organic solvents contained therein are not enviromentally friendly.

US 5665457 discloses a similar process that uses a water based ink/coating system but employs inks that contain a curing agent which are often toxic such as epoxy or aziridine to generate cross-linked structure for good durability. Furthermore these curing agents can induce in-pot curing and adversely affect in-pot stability.

US 4196033 and US 8313824 disclose a means to form an embossed or three-dimensional effect on a decorative paper, using a thermosetting impregnating resin and forming the paper on a shaping member under elevated temperature.

US7131380 discloses a means to achieve a patterned effect, particularly profile ridges, in a printed substrate, utilizing a low surface tension electron-beam-curing coating that can be patterned and subsequently printed over, generating a ridged effect.

Finally US 5019202 discloses a means to generate an embossed effect using a blocked curing agent or polymerization catalyst and a curing resin.

### SUMMARY OF THE INVENTION

The present invention provides a process for the production of a decorated article comprising the steps of:
a) printing a first energy curable water-based ink or coating composition onto a substrate to provide a pore pattern layer thereon;
b) drying the pore pattern layer;
c) printing a second energy curable water-based ink or coating composition onto the pore pattern layer to provide a topcoat layer thereon;
d) drying the topcoat layer and
e) energy curing the printed substrate to provide a cross-linked structure
wherein the first ink or coating composition contains a repellant and wherein both the first ink or coating composition and the second ink or coating composition do not contain a curing agent; wherein the repellant is a surface tension modifiying additive selected firom a group consisting of silicones, waxes, and fluorocarbon polymers; and wherein the definition of a curing agent excludes radical photoinitiators and/or cationic photoinitiators.

These and other objects, advantages, and features of the invention will become apparent to those persons skilled in the art upon reading the details of the methods and formulations as more fully described below.

### BRIEF DESCRIPTION OF THE DRAWING

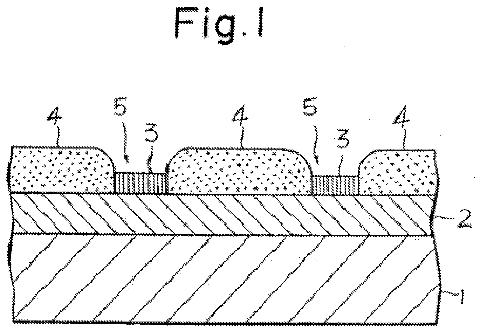

FIG. 1 is a sectional view of printed decorative article produced by the process according to the present invention.

### DETAILED DESCRIPTION OF THE INVENTION

The present invention is directed to providing a substrate, typically a paper sheet, web or roll with a three dimensional decorative surface without the use of toxic solvents and curing agents.

The process typically involves providing a substrate with a printed design layer which is then usually dried. A pore pattern layer is then printed onto the printed design layer using a first energy curable water-based ink or coating composition which is essentially free of a curing or cross-linking agent and essentially contains a repellant.

In particular, the present invention avoids the use of curing agents such as aziridines, melamines, formaldehyde, melamine-formaldehyde, epoxies, anhydrides, amines, amides, carbodiimides, isocyanates, mercapto compounds, silanes, Michael addition reaction materials and Diels-Alder reaction materials.

Furthermore, wherein the present invention comprises UV-curable inks, the inks will typically contain radical photoinitiators and/or cationic photoinitiators to initiate free radical curing upon exposure to UV light. Radical photoinitiators and cationic photoinitiators would not be considered as curing agents as those discussed herein above.

Additionally, curing agents that the present invention also excludes are blocked acids.

The pore pattern layer is then dried prior to applying a topcoat layer thereon.

The topcoat layer is provided by a second energy curable water-based ink or coating composition which is also essentially free of a curing or cross-linking agent and may also contain a repellant.

The pore pattern layer and the topcoat layer may have different gloss levels which accentuates the three dimensional effect. In particular, the topcoat layer may be highly glossy whilst the pore pattern layer is matte or visa versa.

The printed design layer, the pore pattern layer and the topcoat layer are typically heat dried or dried by infra-red radiation.

In particular, the pore pattern layer is not energy cured and preferably the topcoat layer is not energy cured.

The layers are advantageously dried such that the layer is dry to the touch of a finger (the so-called 'touch dry' state, well known to those skilled in the art).

This may also be considered a dry tack-free state which is the stage of drying that when the ink or coating composition is lightly touched it no longer feels sticky or tacky.

It has been found that by drying the pore pattern layer as herein described above prior to applying the topcoat layer ensures that the topcoat layer positioned in the pores of the printed pore pattern layer is repelled and thus forms concavities over the substrate surface upon drying as herein described above.

Furthermore prior to printing the pore pattern layer onto the substrate a printed design layer may be printed thereon and the pore pattern layer is printed onto the printed design layer. Advantageously, the printed design layer imitates the grain of wood.

Typically, the printed design layer is water-based, solvent-based, a hot-melt, a powder and/or energy-curing and is dried as herein described above prior to the pore pattern layer being printed thereon.

Additionally a third ink or coating composition may be applied onto the dried topcoat layer and may be a water based, solvent-based, a hot-melt, a powder and/or energy-curing ink or coating composition.

Finally the complete printed substrate is energy cured with advantageously a single exposure of electron beam (EB) radiation or actinic radiation to provide an essentially a cross-linked structure. Consequently, this removes the need for energy cure between the two printing stations and thus saves energy.

FIG. 1 is a sectional view of a decorated article as produced by the process according to the present invention. As shown, the decorated article comprises a substrate [1], a printed design layer [2], a pore pattern layer [3], a topcoat layer [4], and concavities [5] that are formed as the result of repellency of the topcoat [4] in the areas where the pore pattern layer [3] is formed.

The pore pattern layer [3] and the topcoat layer [4] are formed from energy curable water-based ink or coating compositions whereas the printed design layer [2] may be formed from any type of ink or coating composition which may be a water-based, a solvent-based, energy curable or a hybrid ink or coating composition.

The water-based ink or coating compositions may be water-dispersible or water-soluble.

Additional ink and/or coating composition layers may be deposited onto the topcoat layer [4]. These additional layers may be produced using any type of ink or coating composition which may be a water-based, a solvent-based, energy curable or a hybrid ink or coating composition.

Furthermore additional primer layers may be deposited beneath or on top of the printed design layer. Once again these primer layers may be produced using any type of ink or coating composition which may be a water-based, a solvent-based, energy curable or a hybrid ink or coating composition.

The substrate [1] is typically in a sheet or web form and is preferably manufactured from any material that is commonly used to form the base paper of decorative paper, including, for example, tissue paper, resin mixed paper and resin impregnated paper that has a basis weight of between about 10-100 g/m².

Alternatively, the substrate may be manufactured from other materials such as plastic films, woven and non-woven materials, and metal foils.

Preferably, the substrate is a paper substrate, advantageously a black iron oxide impregnated paper substrate.

Typically, the printed design layer [2] will be a water-based ink or coating composition that employs a vehicle such as an aqueous acrylic resin which is kneaded with a colorant and various other additives, as well as diluent water.

Preferably, in order to mask the color of substrate [1], a suitable colored ink is applied to the surface of the substrate prior the application of the printed design layer.

Alternatively, for the purpose of closing small holes in the surface of substrate [1] and improving its adhesion, a water-based sealer layer (water-based undercoat layer) may be formed on substrate [1] prior the application of the printed design layer.

The energy curable water-based ink or coating composition applied to form the pore pattern layer [3] comprises of an energy curable vehicle that is mixed with diluent water, as well as a repellent and various other additives.

Typically, the topcoat layer [4] may also contain various additives, such as silicone, wax, fluorocarbon wax or resin.

Advantageously, the pore pattern layer and the topcoat layer comprise a polymer or resin having a cross-linkable ethylenically unsaturated group.

The pore pattern layer and the topcoat layer typically comprise a resin or polymer selected from the group consisting of polyurethanes, polyurethane-polyureas, polyesters, polyamides, polyester-epoxies, epoxies, acrylics, methacrylics, styrenics, copolymers of styrene and maleic anhydride, polyvinyl alcohol, polyvinyl acetate, polyvinyl chloride copolymers, cellulosics, and combinations thereof.

Advantageously, the first ink or coating composition and/or the second ink or coating composition comprises an aqueous polyurethane dispersion.

Typically, the first ink or coating composition and/or the second ink or coating composition comprises between 80 to 98wt% of resin.

The repellent is a surface tension modifying additive selected from a group consisting of silicones, waxes, and fluorocarbon polymers, and includes materials such as silicone resins, polyethylene waxes, polytertafluoroethylene (PTFE) waxes, fluorocarbon resins and waxes and are preferably waxes, especially paraffinic and petroleum derived waxes and natural waxes such as montan, lanolin, carnauba and/or candellila waxes. Fluorocarbon waxes and resins are preferred.

In particular, the waxes may be used in micronized form or in the form of an aqueous dispersion.

Advantageously, the first ink or coating composition contains a paraffin wax and/or natural wax, whilst the second ink or coating composition comprises a polyethylene and/or a polytetrafuoroethylene (PTFE) wax.

The repellent may be preloaded as an aqueous emulsion in the ink or coating composition or, alternatively, it may be incorporated into the ink or coating composition just before use.

The repellent is usually present in the amount ofbetween 2 to 20 wt%, preferably between 8 to 16 wt% and advantageously between 10 to 14 wt% of the ink or coating composition.

Each ink or coating composition layer preferably has a surface tension in the wet state and a surface energy after drying ofbetween 2.4 to 5.4 N/m² (24-54 dyne/cm). Most preferably, the ink or coating compositions will have a surface tension within+ or - 0.5 N/m² (5 dynes/sq. cm) of the dried coating it is to be printed or coated over.

The layers may be applied by a coating or printing process selected from the group consisting offlexography, gravure, roll coating, reverse roll coating, anilox, lithography, spray coating, powder coating, electrodeposition, hot melt, screen printing, pad printing, tampon printing, xerography, elcography, ink jet, dip coating, cascade coating, slot coating, air knife coating, curtain coating and trough coating.

Typically, the printed pore pattern layer [3], may be applied to the substrate by any known printing technique such as inkjet, flexographic, gravure, screen, pad and lithographic printing.

The topcoat [4] may be applied by any customary coating techniques including, for example, roll coating, gravure coating,flexographic coating, bar coating, die coating, air-knife coating, flow coating, curtain coating, spin coating, spray coating, cascade coating and dip/trough coating.

Additionally the topcoat layer [4] is preferably applied to the entire surface of the underlying layers including the pore pattern layer [3], and thereafter dried by heating with the temperature being varied stepwise.

The invention is further described by the examples given below.

### EXAMPLES

### Example 1: Preparation of a decorative article according to the present invention

A surface of a black iron oxide impregnated paper substrate was subjected to overall gravure printing with a water-based ink and heat dried to a tack-free/touch dry finish. Then, a printed design layer imitating the grain of wood was gravure printed with a water-based ink and heat dried to a tack-free/touch dry finish.

In the next step, a pore pattern layer was gravure printed onto with the printed design layer using the coating composition set out in Table 1 and dried to a tack-free/touch dry finish.

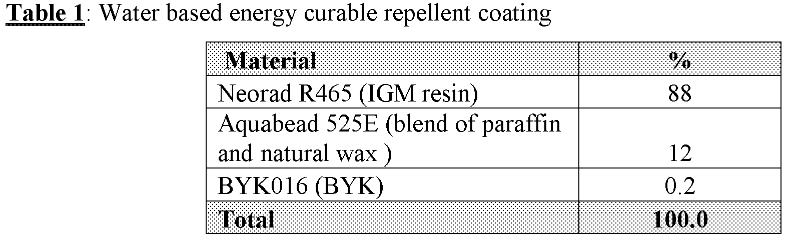

Subsequently, an electron beam curable water-based topcoat of the formula shown below in Table 2 was gravure coated on the entire surface to give a deposit of 6 g/m² on a dry basis and dried to a tack-free/touch dry finish.

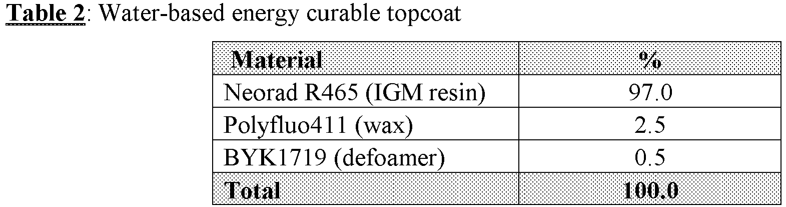

As a result the topcoat layer in the areas where the pore pattern was formed was repelled to provide a concave surface having a good aesthetic appeal. The printed decorative paper as the final product had a concave pore pattern in register with the grained design.

As a final curing step, the entire printed substrate was subjected to EB curing.

The finished printed substrate exhibits improved solvent resistance when compared to the current industry standard as measured using methyl ethyl ketone (MEK) double rubs - see Table 3.

**Table 3: Solvent resistance of Example 1 vs. Comparative Industry Standards**

| | **Example 1 (Inventive)** | **Liochem Repellant Ink + 1% Liochem Epoxy Crosslinker** | **Liochem Repellant Ink w/o Crosslinker** |
|---|---|---|---|
| **MEK Double Rubs** | 20 | 15 | 5 |

Coatings were printed side by side using K-coater Kbar#2 at speed 7. Coated prints were heated at 150°C oven for 45 seconds to insure the curing of the water based coatings and then passed through electron beam at 30KGY dosage, 101 KV voltage, 3.7 mA and 50 fpm.

The present invention offers the following advantages:

First, the use of water-based coating solutions and inks eliminates the health and environmentally problems associated with the use of organic solvents in the prior art. As a result, the required large-scale exhaust facilities are obviated and one can produce environmentally friendly printed decorative paper.

Secondly, being produced with water-based resin, preferably, with ethylenically unsaturated double bond, the coatings can be further cross-linked without using any toxic curing agent (such as those containing aziridine or formaldehyde), and the printed decorative paper of the invention has sufficient resistance to water, oil, detergent, and scratching, and it is also stain resistant from coffee, tea, ketchup, mustard, and other staining materials well-known to those skilled in the art, and exhibits better MEK (methyl ethyl ketone) resistance (as representative of resistance to common solvents such as ethanol, gasoline and paint thinners) so that it has enhanced durability for use as an interior decor material. Tests were carried out as described in ANSI "NEMA Standards Publication LD 3-2005" - sections 3.4 and 3.7.

**Table 4. Product Resistance Results.**

| **Example 1** | **Results** |
|---|---|
| Scratch - 200 grams | 0 |
| Water | 0 |
| Vegetable Oil | 0 |
| Catsup | 0 |
| Mustard | 0 |
| Coffee | 0 |
| Tea | 0 |

| | |
|---|---|
| 0 = no removal | |

The above examples are drawn to an EB curing embodiment, but it is understood that other means of energy cure are also within the scope of the present invention, including UV cure, which requires the addition of photoinitiators, which is well known in the art.

While the present invention has been described with reference to the specific embodiments thereof, it should be understood by those skilled in the art that various changes may be made, and equivalents may be substituted, without departing from the scope of the invention as defined by the claims. In addition, many modifications may be made to adapt a particular situation, material, composition of matter, process, process step or steps, to the objective, scope of the present invention as defined by the claims. All such modifications are intended to be within the scope of the invention as defined by the claims.

## Claims

1. A process for the production of a decorated article comprising the steps of:
a) printing a first energy curable water-based ink or coating composition onto a substrate (1) to provide a pore pattern layer (3) thereon;
b) drying the pore pattern layer;
c) printing a second energy curable water-based ink or coating composition onto the pore pattern layer to provide a topcoat layer thereon (4);
d) drying the topcoat layer and energy curing the printed substrate to provide a cross-linked structure wherein the first ink or coating composition contains a repellant and wherein both the first ink or coating composition and the second ink or coating composition do not contain a curing agent; wherein
the repellant is a surface tension modifying additive selected from a group consisting of silicones, waxes, and fluorocarbon polymers; and wherein
the definition of a curing agent excludes radical photoinitiators and/or cationic photoinitiators.

2. A process according to claim 1, wherein the pore pattern layer and/or the topcoat layer is: (a) heat dried; and/or (b) dried in an oven or dried using infra-red radiation; and/or (c) is not energy cured; and/or (d) is dried to a touch-dry condition; and/or (e) is dried to a tack-free finish.

3. A process according to any one of the preceding claims wherein prior to printing the pore pattern layer onto the substrate a printed design layer (2) is printed thereon and the pore pattern layer is printed onto the printed design layer, preferably wherein the printed design layer is waterbased, solvent-based, a hot-melt, a powder and/or energy-curing.

4. A process according to claim 3 wherein the printed design layer is dried prior to the pore pattern layer being printed thereon.

5. A process according to claim 3 or claim 4 wherein the printed design layer imitates the grain of wood.

6. A process according to any one of the preceding claims comprising applying a third ink or coating composition onto the dried topcoat layer, preferably wherein the third ink or coating composition is water based, solvent-based, a hot-melt, a powder and/or energy-curing.

7. A process according to any one of the preceding claims wherein the printed substrate is energy cured using electron beam radiation or wherein the printed substrate is energy cured using actinic radiation.

8. A process according to any one of the preceding claims wherein the substrate is in a sheet or web form and/or wherein the substrate is paper, a nonwoven or woven fabric or a plastic filmic material, preferably wherein the substrate is paper, e.g. black iron oxide paper.

9. A process according to any one of the preceding claims wherein the water-based inks or coating compositions are water-dispersible or water-soluble.

10. A process according to any one of the preceding claims wherein the first ink or coating composition and/or the second ink or coating composition comprises:
(a) a resin, preferably a resin having at least one cross-linkable ethylenically unsaturated group, e.g. a resin which is selected from the group consisting of polyurethanes, polyurethanepolyureas, polyesters, polyamides, polyester-epoxies, epoxies, acrylics, methacrylics, styrenics, copolymers of styrene and maleic anhydride, polyvinyl alcohol, polyvinyl acetate, polyvinyl chloride copolymers, cellulosics, and combinations thereof; or
(b) an aqueous polyurethane dispersion; preferably wherein the first ink or coating composition and/or the second ink or coating composition contains between 80 to 98 wt¾ resin.

11. A process according to any one of the preceding claims wherein the repellant comprises at least one of a paraffinic wax and/or a naturally-occurring wax.

12. A process according to any one of the preceding claims wherein the first ink or coating composition and/or second ink or coating composition contains a wax, preferably wherein the first ink or coating composition wax contains a paraffin wax and/or natural wax, more preferably wherein the second ink comprises a polyethylene and/or a polytetrafuoroethylene (PTFE) wax.

13. A process according to any one of the preceding claims wherein the first ink or coating composition and/or the second ink or coating composition: (a) contains between 2 to 20 wt¾ repellant; and/or (b) further comprises a defoamer; and/or (c) is colored, transparent and/or translucent.

14. A process according to any one of the preceding claims wherein the substrate, the dried printed design layer, the dried pore pattern layer and/or the dried topcoat layer have a surface energy of between 2.4 to 5.4 N/m² (24 to 54 dynes/sq. cm); and/or wherein the surface tension of the printing ink or coating composition used to provide the printed design layer, the pore pattern layer and the topcoat layer is within + or - 0.5 N/m² (5 dynes/sq. cm) of the surface energy of the dried underlying layer or substrate.

15. A process according to any one of the preceding claims wherein the ink or coating compositions are applied by a coating or printing process selected from the group consisting of flexography, gravure, roll coating, reverse roll coating, anilox, lithography, spray coating, powder coating, electrodeposition, hot melt, screen printing, pad printing, tampon printing, xerography, elcography, ink jet, dip coating, cascade coating, slot coating, air knife coating, curtain coating and trough coating, preferably wherein the ink or coating compositions are applied using gravure printing.

## Patentansprüche

1. Verfahren für die Herstellung eines dekorierten Gegenstands, umfassend die folgenden Schritte:
a) Drucken einer ersten strahlenhärtbaren, wasserbasierten Druckfarbe oder Beschichtungszusammensetzung auf ein Substrat (1), um eine Porenmusterschicht (3) darauf bereitzustellen;
b) Trocknen der Porenmusterschicht;
c) Drucken einer zweiten strahlenhärtbaren, wasserbasierten Druckfarbe oder Beschichtungszusammensetzung auf die Porenmusterschicht, um eine Deckschicht darauf (4) bereitzustellen;
d) Trocknen der Deckschicht und Strahlenhärten des bedruckten Substrats, um eine vernetzte Struktur bereitzustellen, wobei die erste Druckfarbe oder Beschichtungszusammensetzung ein Repellent enthält, und wobei sowohl die erste Druckfarbe oder Beschichtungszusammensetzung als auch die zweite Druckfarbe oder Beschichtungszusammensetzung kein Härtemittel enthalten, wobei
das Repellent ein Oberflächenspannung modifizierendes Additiv ist, das aus einer Gruppe ausgewählt ist, bestehend aus Silikonen, Wachsen und Fluorkohlenwasserstoffpolymeren und wobei
die Definition eines Härtemittels radikalische Photoinitiatoren und/oder katonische Photoinitiatoren ausschließt.

2. Verfahren nach Anspruch 1, wobei die Porenmusterschicht und/oder die Deckschicht wie folgt ist: (a) wärmegetrocknet; und/oder (b) getrocknet in einem Ofen oder getrocknet mit Infrarotstrahlung; und/oder (c) nicht strahlengetrocknet; und/oder (d) getrocknet auf einen handtrockenen Zustand; und/oder (e) getrocknet auf ein klebfreies Finish.

3. Verfahren nach einem der vorstehenden Ansprüche, wobei vor Drucken der Porenmusterschicht auf das Substrat eine bedruckte Designschicht (2) darauf gedruckt wird, und die Porenmusterschicht auf die gedruckte Designschicht gedruckt wird, wobei vorzugsweise die gedruckte Designschicht wasserbasiert, lösungsmittelbasiert, eine Heißschmelze, ein Pulver und/oder Strahlenhärtung ist.

4. Verfahren nach Anspruch 3, wobei die gedruckte Designschicht getrocknet wird, ehe die Porenmusterschicht darauf gedruckt wird.

5. Verfahren nach Anspruch 3 oder Anspruch 4, wobei die gedruckte Designschicht die Holzmaserung imitiert.

6. Verfahren nach einem der vorstehenden Ansprüche, umfassend das Auftragen einer dritten Druckfarbe oder Beschichtungszusammensetzung auf die getrocknete Deckschicht, wobei vorzugsweise die dritte Druckfarbe oder Beschichtungszusammensetzung wasserbasiert, lösungsmittelbasiert, eine Heißschmelze, ein Pulver und/oder Strahlenaushärtung ist.

7. Verfahren nach einem der vorstehenden Ansprüche, wobei das bedruckte Substrat unter Anwendung von Elektronenstrahlung strahlengehärtet wird, oder wobei das bedruckte Substrat unter Anwendung von aktinischer Strahlung strahlengehärtet wird.

8. Verfahren nach einem der vorstehenden Ansprüche, wobei das Substrat in einer Bogen- oder Bahnform vorliegt, und/oder wobei das Substrat Papier, ein Vliesstoff oder Gewebe oder ein Kunststofffolienmaterial ist, wobei vorzugsweise das Substrat Papier ist, z. B. schwarzes Eisenoxidpapier.

9. Verfahren nach einem der vorstehenden Ansprüche, wobei die wasserbasierten Druckfarben oder Beschichtungszusammensetzungen wasserdispergierbar oder wasserlöslich sind.

10. Verfahren nach einem der vorstehenden Ansprüche, wobei die erste Druckfarbe oder Beschichtungszusammensetzung und/oder die zweite Druckfarbe oder Beschichtungszusammensetzung Folgendes umfasst:
(a) ein Harz, vorzugsweise ein Harz, das mindestens eine vernetzbare, ethylenisch ungesättigte Gruppe aufweist, z. B. ein Harz, das aus der Gruppe ausgewählt ist, bestehend aus Polyurethanen, Polyurethanpolyharnstoffen, Polyestern, Polyamiden, Polyester-Epoxiden, Epoxiden, Acrylharzen, Methacrylharzen, Styrolkunststoffen, Copolymeren von Styrol und Maleinsäureanhydrid, Polyvinylalkohol, Poylvinylacetat, Polyvinylchloridcopolymeren, zellulosehaltigen Stoffen und Kombinationen davon; oder
(b) eine wässrige Polyurethandispergierung; wobei vorzugsweise die erste Druckfarbe oder Beschichtungszuammensetzung und/oder die zweite Druckfarbe oder Beschichtungszusammensetzung zwischen 80 und 98 Gew.-% Harz enthält.

11. Verfahren nach einem der vorstehenden Ansprüche, wobei das Repellent mindestens eins von Paraffinwachs und/oder einem natürlich auftretenden Wachs umfasst.

12. Verfahren nach einem der vorstehenden Ansprüche, wobei die erste Druckfarbe oder Beschichtungszusammensetzung und/oder die zweite Druckfarbe oder Beschichtungszusammensetzung ein Wachs enthält, wobei vorzugsweise der erste Druckfarben- oder Beschichtungszusammensetzungswachs ein Paraffinwachs und/oder natürliches Wachs enthält, mehr bevorzugt, wobei die zweite Druckfarbe ein Polyethylen- und/oder ein Polytetrafluorethylen (PTFE)-Wachs umfasst.

13. Verfahren nach einem der vorstehenden Ansprüche, wobei die erste Druckfarbe oder Beschichtungszusammensetzung und/oder die zweite Druckfarbe oder Beschichtungszusammensetzung: (a) zwischen 2 bis 20 Gew.-% Repellent enthält; und/oder (b) ferner einen Entschäumer enthält; und/oder (c) gefärbt, transparent und/oder durchleuchtend ist.

14. Verfahren nach einem der vorhergehenden Ansprüche, wobei das Substrat, die getrocknete bedruckte Designschicht, die getrocknete Porenmusterschicht und/oder die getrocknete Deckschicht eine Oberflächenenergie von zwischen 2,4 und 5,4 N/m² (24 und 54 dynes/sq. cm) aufweisen; und/oder wobei die Oberflächenspannung der Druckfarbe oder Beschichtungszusammensetzung, die angewandt wird, um die bedruckte Designschicht, die Porenmusterschicht und die Deckschicht bereitzustellen, innerhalb von + oder -0,5 N/m² (5 dynes/sq. cm) der Oberflächenenergie der getrockneten zugrundeliegenden Schicht oder des getrockneten zugrundliegenden Substrats liegt.

15. Verfahren nach einem der vorstehenden Ansprüche, wobei die Druckfarbe oder Beschichtungszusammensetzung durch ein Beschichtungs- oder Druckverfahren aufgetragen wird, das aus der Gruppe ausgewählt ist, bestehend aus Flexographie, Tiefdruck, Walzenstreichen, Gegenlaufwalzenstreichen, Rasterwalzenverfahren, Lithographie, Sprühbeschichtung, Pulverbeschichtung, elektrolytischer Abscheidung, Heißschmelzen, Siebdruck, Paddruck, Tampondruck, Xerographie, Elcographie, Tintenstrahldruck, Tauchbeschichtung, Kaskadenbeschichtung, Schlitzbeschichtung, Luftrakelbeschichtung, Vorhangbeschichtung und Rinnenbeschichtung, wobei die Druckfarbe oder Beschichtungszusammensetzungen vorzugsweise unter Anwendung des Tiefdrucks aufgetragen werden.

## Revendications

1. Procédé pour la production d'un article décoré comprenant les étapes consistant à :
a) imprimer une première composition d'encre ou de revêtement à base d'eau durcissable par de l'énergie sur un substrat (1) pour disposer une couche de motif poreux (3) sur celui-ci ;
b) faire sécher la couche de motif poreux ;
c) imprimer une seconde composition d'encre ou de revêtement à base d'eau durcissable par de l'énergie sur la couche de motif poreux pour disposer une couche de finition (4) sur celle-ci ;
d) faire sécher la couche de finition et faire durcir par de l'énergie le substrat imprimé pour fournir une structure réticulée,
dans lequel la première composition d'encre ou de revêtement contient un répulsif et dans lequel la première composition d'encre ou de revêtement et la seconde composition d'encre ou de revêtement ne contiennent ni l'une ni l'autre un agent durcisseur ; dans lequel le répulsif est un additif modifiant la tension superficielle choisi dans un groupe constitué par les silicones, les cires et les polymères fluorocarbonés ; et
dans lequel la définition d'un agent durcisseur exclut les photoinitiateurs radicalaires et/ou les photoinitiateurs cationiques.

2. Procédé selon la revendication 1 dans lequel la couche de motif poreux et/ou la couche de finition : (a) sont séchées par de la chaleur ; et/ou (b) sont séchées dans une étuve ou séchées à l'aide d'un rayonnement infrarouge ; et/ou (c) ne sont pas durcies par de l'énergie ; et/ou sont séchées jusqu'à un état sec au toucher ; et/ou (e) sont séchées jusqu'à une finition hors poisse.

3. Procédé selon l'une quelconque des revendications précédentes dans lequel avant l'impression de la couche de motif poreux sur le substrat une couche de style imprimée (2) est imprimée sur celui-ci et la couche de motif poreux est imprimée sur la couche de style imprimée, de préférence la couche de style imprimée étant à base d'eau, à base de solvant, un adhésif thermofusible, une poudre et/ou durcissable par de l'énergie.

4. Procédé selon la revendication 3 dans lequel la couche de style imprimée est séchée avant que la couche de motif poreux soit imprimée sur celle-ci.

5. Procédé selon la revendication 3 ou la revendication 4 dans lequel la couche de style imprimée imite le grain du bois.

6. Procédé selon l'une quelconque des revendications précédentes comprenant l'application d'une troisième composition d'encre ou de revêtement sur la couche de finition séchée, de préférence la troisième composition d'encre ou de revêtement étant à base d'eau, à base de solvant, un adhésif thermofusible, une poudre et/ou durcissable par de l'énergie.

7. Procédé selon l'une quelconque des revendications précédentes dans lequel le substrat imprimé est durci par de l'énergie à l'aide d'un rayonnement de faisceau d'électrons ou dans lequel le substrat imprimé est durci par de l'énergie à l'aide d'un rayonnement actinique.

8. Procédé selon l'une quelconque des revendications précédentes dans lequel le substrat est sous une forme de feuille ou de bande continue et/ou dans lequel le substrat est du papier, un non-tissé ou un tissu ou un matériau plastique sous forme de film, de préférence dans lequel le substrat est du papier, par exemple du papier à l'oxyde de fer noir.

9. Procédé selon l'une quelconque des revendications précédentes dans lequel les encres ou compositions de revêtement à base d'eau sont dispersibles dans l'eau ou solubles dans l'eau.

10. Procédé selon l'une quelconque des revendications précédentes dans lequel la première composition d'encre ou de revêtement et/ou la seconde composition d'encre ou de revêtement comprennent :
(a) une résine, de préférence une résine ayant au moins un groupe à insaturation éthylénique réticulable, par exemple une résine qui est choisie dans le groupe constitué par les polyuréthanes, les polyuréthane-polyurées, les polyesters, les polyamides, les polyester-époxydes, les époxydes, les résines acryliques, les résines méthacryliques, les résines styréniques, les copolymères de styrène et d'anhydride maléique, le poly(alcool vinylique), le poly(acétate de vinyle), les copolymères de poly(chlorure de vinyle), les matières cellulosiques et les associations de ceux-ci ; ou
(b) une dispersion aqueuse de polyuréthane ;
de préférence dans lequel la première composition d'encre ou de revêtement et/ou la seconde composition d'encre ou de revêtement contiennent entre 80 et 98 % en poids de résine.

11. Procédé selon l'une quelconque des revendications précédentes dans lequel le répulsif comprend au moins l'une d'une cire paraffinique et/ou d'une cire d'origine naturelle.

12. Procédé selon l'une quelconque des revendications précédentes dans lequel la première composition d'encre ou de revêtement et/ou la seconde composition d'encre ou de revêtement contiennent une cire, de préférence dans lequel la cire de la première composition d'encre ou de revêtement contient une cire de paraffine et/ou une cire naturelle, de préférence encore dans lequel le seconde encre comprend une cire de polyéthylène et/ou de polytétrafluoroéthylène (PTFE).

13. Procédé selon l'une quelconque des revendications précédentes dans lequel la première composition d'encre ou de revêtement et/ou la seconde composition d'encre ou de revêtement : (a) contiennent entre 2 et 20 % en poids de répulsif ; et/ou (b) comprennent en outre un antimousse ; et/ou (c) sont colorées, transparentes et/ou translucides.

14. Procédé selon l'une quelconque des revendications précédentes dans lequel le substrat, la couche de style imprimée séchée, la couche de motif poreux séchée et/ou la couche de finition séchée ont une énergie de surface comprise entre 2,4 et 5,4 N/m² (entre 24 et 54 dyn/cm²) ; et/ou dans lequel la tension superficielle de la composition d'encre d'impression ou de revêtement utilisée pour fournir la couche de style imprimée, la couche de motif poreux et la couche de finition est dans les limites de + ou - 0,5 N/m² (5 dyn/cm²) de l'énergie de surface de la couche sous-jacente séchée ou du substrat.

15. Procédé selon l'une quelconque des revendications précédentes dans lequel les compositions d'encre ou de revêtement sont appliquées par un procédé de revêtement ou d'impression choisi dans le groupe constitué par la flexographie, la gravure, le revêtement au rouleau, le revêtement au rouleau inversé, l'anilox, la lithographie, le revêtement par pulvérisation, le poudrage, le dépôt électrolytique, le revêtement par fusion, la sérigraphie, l'impression au tampon, la tampographie, la xérographie, l'Elcography, le jet d'encre, le revêtement au trempé, le revêtement en cascade, le revêtement par fente, le revêtement par lame d'air, le revêtement au rideau et le revêtement en auge, de préférence dans lequel les compositions d'encre ou de revêtement sont appliquées à l'aide d'une impression par gravure.
